(19) Europäisches Patentamt

European Patent Office

Office européen des brevets

(11) EP 0 737 870 B1

(12) FASCICULE DE BREVET EUROPEEN

(45) Date de publication et mention
de la délivrance du brevet:
**03.07.2002 Bulletin 2002/27**

(51) Int Cl.⁷: **G02B 5/10**, G02B 17/00,
G02B 3/04

(21) Numéro de dépôt: **96400796.7**

(22) Date de dépôt: **12.04.1996**

(54) **Système de projection comportant un réflecteur et une lentille de champ à surface libre**

Projektionssystem mit einem Reflektor und einer Feldlinse

Projection system comprising a reflector and field lens

(84) Etats contractants désignés:
**DE FR GB IT**

(30) Priorité: **13.04.1995 FR 9504477**

(43) Date de publication de la demande:
**16.10.1996 Bulletin 1996/42**

(73) Titulaire: **THOMSON multimedia**
**92648 Boulogne Cédex (FR)**

(72) Inventeurs:
• **Wiethege, Friedheim**
**92050 Paris la Defense Cedex (FR)**
• **Marcellin-Dibon, Eric**
**92050 Paris la Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 266 244          GB-A- 2 040 431**
**US-A- 4 234 247**

• **APPLIED OPTICS, vol. 31, no. 28, 1 Octobre 1992,
NEW YORK US, pages 6027-6035, XP002004835
J.M.GORDON ET AL.: "NONIMAGING
REFLECTORS FOR EFFI9CIENT UNIFORM
ILLUMINATION"**

**Description**

La présente invention concerne un système d'illumination de projecteur LCD optimisant l'éclairement au travers de l'écran à cristaux liquide ainsi que l'ouverture de l'objectif du système.

Un système de projection au travers d'un écran à cristaux liquide est constitué en général d'une lampe à arc du type hallogénure métallique à filament ou xénon, positionné au foyer d'un réflecteur parabolique ou elliptique muni d'un condenseur. La lumière blanche émise par la lampe et réfléchie par le réflecteur est transmise à travers une lentille de champ vers l'écran à cristaux liquides (ou modulateur électrooptique) qui fonctionne en valve optique. En général, ces modulateurs sont à structure matricielle active commandés par des transistors en couches fines (TFT). Les images transmises au travers de l'écran à cristaux liquides sont ensuite projetées sur un écran grâce à un objectif. Pour obtenir des images couleurs, on combine trois écrans à cristaux liquide que l'on place sur chacun des chemins optiques bleu, vert et rouge ou on utilise un seul écran à cristaux liquides couleur. Un tel système est décrit précisément dans le brevet US 5 084 807 de TS McKechnie et al.

Actuellement, ce type de projecteur a un faible rendement lumineux, de l'ordre de 1 à 2% seulement. Cela est dû principalement aux pertes dans le réflecteur, au fait que la source d'illumination n'est pas polarisée (perte de plus de 70% du flux lumineux), au format des écrans à cristaux liquide qui sont rectangulaires (perte d'environ 46%) et à l'efficacité de découpage du spectre blanc de la lampe (de 50 à 60% de perte).

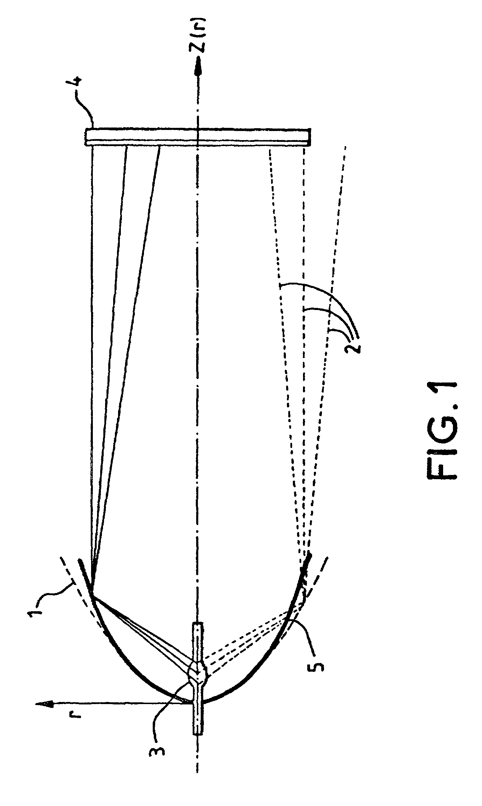

Sur la figure 1 est illustré le problème de la dispersion de la lumière autour du modulateur. On constate que dans le cas d'un réflecteur parabolique 1 (en lignes pointillées sur la figure), les rayons 2 de la lumière émise par la lampe à arc 3 (en lignes pointillées) viennent illuminer les zones extérieures à l'écran 4. Ces pertes géométriques représentent plus de 50% des pertes de luminosité du système. D 'autre part, l'utilisation d'une lentille de champ sphérique forme une image agrandie de la source et nécessite donc un objectif de projection très ouvert. En effet, les rayons incidents sur la lentille de champs sphérique n'étant pas parallèles en tout point de la lentille, l'image de la source est grande et conduit à une taille importante de pupille pour l'objectif de projection

UK-A- 2040431 divulgue un système d'éclairage où la surface d'un réflecteur est localement approximée par une série de surfaces côniques.

US-A- 4234247 divulgue un réflecteur dont la surface est également divisée en surfaces côniques.

La présente invention permet d'éliminer les inconvénients de ces solutions connues et d'augmenter grandement l'efficacité d'éclairement de l'écran grâce à des formes judicieuses de réflecteurs, lentilles de champ et lentilles de correction d'angles permettant d'améliorer grandement la qualité de l'illumination sur l'écran final de projection, en minimisant les pertes de lumière entre la lampe et l'écran de projection final.

La présente invention concerne un réflecteur selon la revendication 1.

Un second exemple d'application de la présente invention concerne une lentille de champ selon la revendication 4.

Un troisième exemple de réalisation de la présente invention concerne une lentille de correction d'angles selon la revendication 3.

Un quatrième exemple de réalisation de la présente invention concerne une lentille de correction d'angles suivant la revendication 6.

La présente invention concerne aussi des dispositifs selon les revendication dépendantes 2, 3, 7 et 9.

Chacun de ces dispositifs optiques améliore l'efficacité de l'éclairement, et la présente demande de brevet couvre aussi les systèmes de projection utilisant tous les types de combinaisons de ces différents éléments.

La présente invention sera mieux comprise et les avantages supplémentaires apparaîtront à la lecture de la description qui va suivre illustrée par les figures suivantes :

- la figure 1, déjà décrite, représente la superposition des éclairements d'un réflecteur selon l'état de l'art et d'un réflecteur selon la présente invention,
- les figures 2a, 2b et 2c illustrent un premier exemple d'application de la présente invention à un réflecteur à surface libre,
- la figure 3 illustre un second exemple d'application de cette invention à une lentille de champ à surface libre,
- la figure 4 représente un troisième exemple d'application de la présente invention à une lentille correctrice d'angle avec réseau de microlentilles,
- et la figure 5 représente un quatrième exemple d'application de la présente invention à la combinaison d'un réflecteur quelconque et d'une lentille de correction d'angles destinée à l'éclairement d'une surface libre.

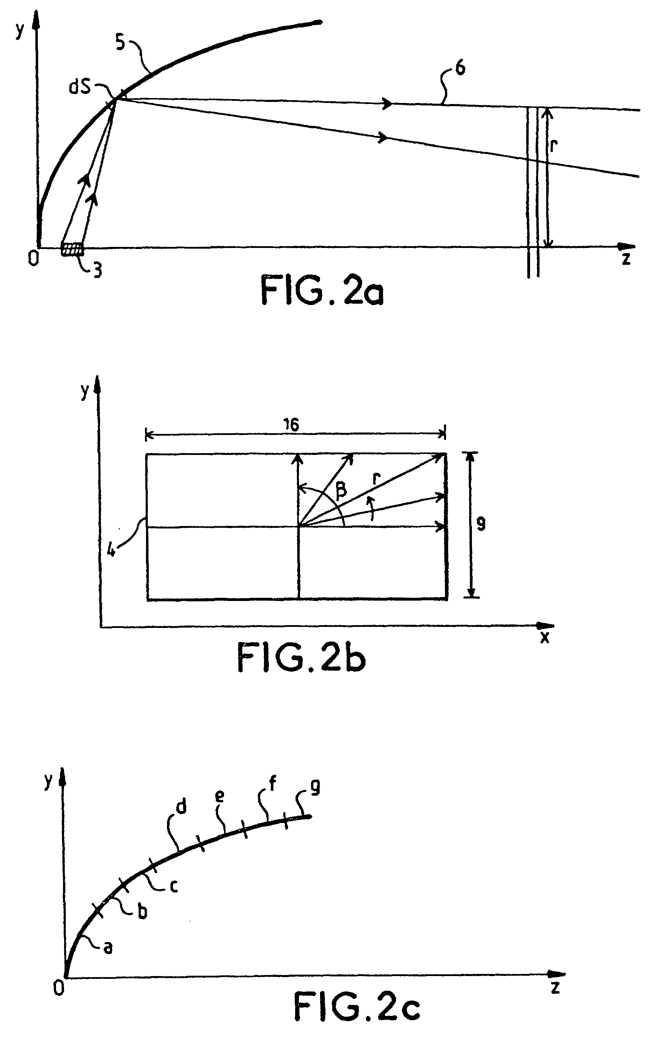

La forme libre du réflecteur 5 selon l'invention est obtenue par la paramétrisation du système comme cela est représenté sur la figure 2a. L'inclinaison de chaque surface élémentaire dS du réflecteur 5 est calculée pour que les rayons extrèmes provenant de la lampe entrent dans le diaphragme de rayon r. La forme $Z_{r,\beta}$ du réflecteur 5 est décrite par un ensemble de fonctions $Z(\rho)$, chacune donnée par un plan médian $(r,\beta)$ à éclairé défini par le paramètre r distance du centre de la valve à ses bords, et $\beta$ l'angle que fait ce plan avec le plan horizontal, c'est à dire que l'intersection de ces plans est constituée par l'axe optique (oz). Ces fonctions peuvent avoir de multiples formes comme, celle, par exemple, d'une conique+polynôme ou polynôme pur. Dans l'exemple illustrant la présente invention, la fonction considérée est la suivante:

$$Z(\rho,\beta) = \frac{c.r^2}{1+\sqrt{1-(1+e)c^2\rho^2}}+a_2\rho^2 a_4\rho^4+a_6\rho^6+...+a_n\rho^n \qquad (1)$$

La première partie du membre de droite est l'équation d'une cônique de révolution autour de l'axe optique (oz) à laquelle vient s'ajouter un polynôme de degré n représentant la déformation de la cônique. L'inclinaison de chaque surface élémentaire dS du réflecteur 5 est calculée pour que le rayon extérieur 6 provenant de la lampe 3 entre dans le diaphragme, comme par exemple montré Figure 2c.

Théoriquement, en faisant cette optimisation pour un grand nombre de plans (r,$\beta$), on obtient un réflecteur à forme libre. En effet, chaque plan médian est caractérisé par un angle $\beta$, et lui correspond un rayon r, le paramètre r décrivant la bordure de la valve optique, un écran LCD 16/9ème dans le cas de la figure 2b. On peut calculer chacun des polynomes précédents à partir de l'équation (1) pour chaque plan médian (r, $\beta$).

Afin d'obtenir la forme optimisée du réflecteur selon l'invention, il est nécessaire d'interpoler tous les polynômes précédemment obtenus par - c'est un exemple - le polynôme en (x, y) suivant :

$$Z(x,y) = \frac{c.\rho^2}{1+\sqrt{1-(1+\varepsilon)c^2\rho^2}} + \sum_{i=1}^{n}\sum_{j=0}^{i} b_{ij}x^{i-j}y^j, \qquad (2)$$

c étant le rayon de courbure de la cônique de départ et $\varepsilon$ l'éllipticité de la cônique.

Ainsi, par exemple, on obtient pour n=4:

$$Z(\rho,\beta) = \frac{\rho^2}{4.f} + \sum_{i=1}^{4}\sum_{j=0}^{i} b_{ij}x^{i-j}y^j$$

$$= \frac{\rho^2}{4.f} + b_{10}x + b_{11}y + b_{20}x^2 + b_{21}xy + b_{22}y^2$$

$$+b_{30}x^3 + b_{31}x^2y + b_{32}xy^2 + b_{33}y^3 \qquad (3)$$

$$+b_{40}x^4 + b_{41}x^3y + b_{42}x^2y^2 + b_{43}xy^3 + b_{44}y^4 \qquad .$$

On obtient ainsi pour n= 4 quatorze coefficients à calculer. Pour y parvenir, on réalise d'une manière connu par l'homme de l'art, une interpolation polynômiale à deux dimensions à partir de l'ensemble des données générées par l'équation (1) et en retournant les coefficients de l'équation (2). On a ainsi obtenu l'équation d'un réflecteur 5 délivrant une forme d'illumination proche du format de l'écran LCD 4. L'illumination à travers celui-ci est ainsi optimisée.

Un exemple de réalisation peut être fait à partir des paramètres suivants:

-    paraboloïde : distance focale 11 mm,

     .    rayon : 50 mm,

-    lampe. longueur de l'arc : 5,0 mm,

. diamètre de l'arc : 1,5 mm,

. taille du LCD 16/9: 2.2 "/48.7 x 27.4 mm$^2$,

. distance source plan d'illumination : 20mm,

. distance lentille de champ - écran LCD : 20 mm,

. distance lentille de champ - entrée de la pupille : 150 mm.

Du fait de la distance entre l'écran LCD et la lentille de champ, le plan d'illumination doit être plus large que la taille de l'écran LCD, en fait 56,2 x 36,6 mm$^2$ dans ce cas.

Le réflecteur à forme libre ainsi définie éclaire la lentille de champ de façon rectangulaire. Les rayons incidents arrivent sur la lentille avec différentes inclinaisons.

Plutôt que d'utiliser la forme rectangulaire de l'écran à cristaux liquide pour définir, comme décrit plus haut, la forme du réflecteur, on peut utiliser une courbe qui permet de mieux répartir le flux et d'améliorer alors l'efficacité et l'uniformité d'éclairement du système de projection. Cette courbe peut avoir une forme approximativement ronde, et être décrite par le paramêtre r et l'angle β. En effet, dans les petites dimensions de l'écran à cristaux liquides, les angles induits par le réflecteur sont souvent trop grands et cela conduit à une non uniformité de l'éclairement. Il peut ainsi être préférable de calculer la forme du réflecteur comme précédemment, mais, afin d'améliorer le flux, à partir d'une surface approximativement ronde et dont le diamètre moyen est de préférence compris entre le petit et le grand côté de l'écran.

Une autre variante de réalisation pour améliorer l'éclairement peut consister à diviser le réflecteur en plusieurs tranches a, b, c, d, e, f et g, comme dans l'exemple de la figure 2c, et de considérer des fonctions Z(ρ) différentes pour toutes ou plusieurs d'entre elles.

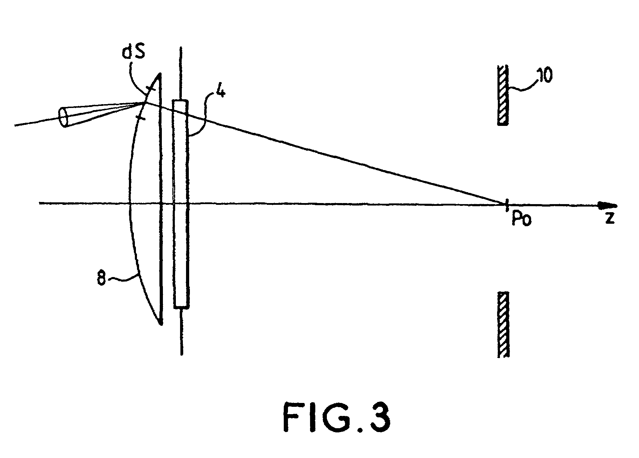

Le principe décrit ci-dessus peut être appliqué à une lentille de champ à surface libre, en calculant pour chaque point de la lentille de champ 8 la courbure, de façon à focaliser le rayon moyen incident au centre de l'objectif. De la même manière que précédemment et comme cela est représenté sur la figure 3, dans une première étape, on considère une surface élémentaire dS de la lentille 8, et on calcule l'inclinaison de chaque surface élémentaire dS de la lentille pour que le rayon moyen incident soit focalisé au centre de la pupille d'entrée de l'objectif de projection 10. De même que pour le calcul de la forme du réflecteur, on considère un ensemble de fonctions Z(ρ), chacune étant donnée pour un plan médian (β ,Po) défini par l'angle β que fait chaque plan avec l'horizontal et Po le centre de la pupille de l'objectif. On peut calculer chacun des polynômes $a_2r^2a_4r^4+a_6r^6+...+a_nr^n$ pour chaque plan médian (β,Po), par exemple pour β= 0°, 15°, 30°, 45°, 60° et 90°. Puis, dans une seconde étape, interpôler tous les polynômes précédents par un polynôme en (x,y) selon, par exemple, l'équation (2).

Un exemple de réalisation d'une lentille optimisée a été fait à partir des paramètres suivants:

Paraboloïde:. longueur focale : 10 mm,

. diamètre : 75 mm,

Lampe:.longueur de l'arc: 5,0 mm,

. diamètre de l'arc : 1,5 mm,

. taille de l'écran LCD 16/9: 2.2"/48.7 x 27;4 mm$^2$,

. distance source-plan d'illumination : 320 mm,

. distance lentille de champ - LCD : 5 mm,

. distance lentille de champ - entrée pupille: 130 mm.

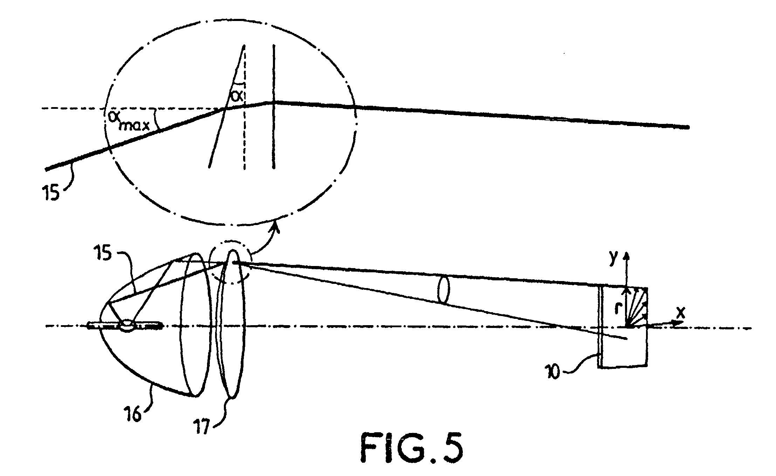

Une autre application de la présente invention peut consister à utiliser une lentille d'éclairement (ou condenseur) réalisée selon le principe de l'invention combinée avec un réflecteur quelconque, par exemple parabolique. comme l'illustre la figure 5. Les rayons 15, après s'être réfléchis sur les parois du réflecteur 16, parviennent sur la lentille 17 avec une inclinaison α par rapport à l'horizontale. La surface élémentaire dS de la lentille sur laquelle les rayons 15 sont entrants, a une inclinaison γ par rapport à la verticale. On calcule l'inclinaison γ de chaque surface élémentaire dS de la lentille de champ de manière à ce que l'ensemble des rayons moyens r correspondant à la surface dS et à l'angle γ décrive la bordure de la valve optique 10. La forme Zr,β de cette lentille est décrite par un ensemble de surfaces élémentaires dS à chacune desquelles est associée une fonction Z($\rho$) correspondant chacune à un plan médian (r,β) à éclairer défini par le paramètre distance r du centre de l'écran à ses bords, et l'angle β que fait ce plan médian avec le plan horizontal, l'inclinaison de chacune des surfaces élémentaires dS étant obtenue en interpolant ces fonctions Z($\rho$) avec une fonction Z(x,y). On peut aussi rajouter entre cette lentille à surface libre et la valve optique une lentille de champ torique focalisant les rayons incidents au centre de la pupille de l'objectif.

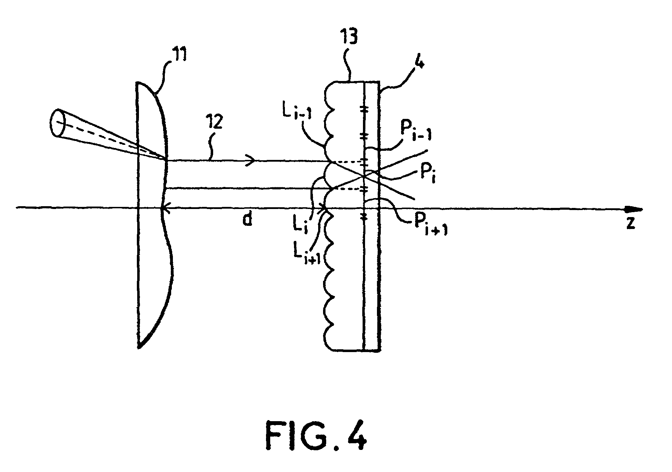

Le principe selon l'invention peut aussi s'appliquer à une lentille de correction d'angles. La figure 4 illustre un exemple d'un système à projection utilisant une telle lentille 11. Celle-ci a une forme libre réalisée selon le principe ci-dessus de manière à ce que les faisceaux sortants 12 soient parallèles à l'axe optique (o,z), et est couplée à un système de microlentilles 13. A chaque microlentille Li du système 13 correspond un pixel Pi de l'écran 4. Ainsi, chaque rayon 12 peut être focalisé au centre de chaque pixel Pi de l'écran 4 comme cela est illustré sur la figure. En plaçant ensuite une lentille de champ focalisant dans la pupille de l'objectif de de projection non représentés sur la figure, on a amélioré l'éclairement du système.

La présente invention peut s'appliquer à tous les types de systèmes optiques utilisant des lentilles, et en particulier aux systèmes de projection permettant l'affichage sur un écran d'images vidéo.

**Revendications**

1. Réflecteur (1,5) utilisé pour éclairer une surface, **caractérisé en ce que** la forme du réflecteur (5) étant décrite par un ensemble de courbes élémentaires, chaque courbe élémentaire étant située sur une courbe enveloppe correspondant à l'intersection de la surface du réflecteur avec un plan médian (r, β) défini par l'angle β que fait ce plan avec le plan horizontal, r étant défini dans ce plan médian par la distance entre le centre et le bord de la surface à éclairer (4), la courbe enveloppe correspondant à un plan médian spécifique (r, β) étant décrite par une fonction $Z_{r\beta}$($\rho$) étant telle, du fait de l'inclinaison de chaque courbe élémentaire, que les rayons extrêmes provenant d'un moyen d'éclairage (3) et réfléchis par ledit réflecteur entrent dans un diaphragme de rayon r, r dépendant dudit plan médian spécifique, la forme du réflecteur étant obtenue en interpolant avec une fonction Z (x,y) un nombre donné de courbes décrivant la fonction $Z_{r\beta}$ ($\rho$), chacune correspondant à un plan médian différent.

2. Réflecteur selon la revendication 1, le paramètre r et l'angle β définissant une surface rectangulaire (4).

3. Réflecteur selon l'une quelconque des revendications 1 et 2, **caractérisé en ce que** le paramètre r et l'angle β définissant une surface approximativement ronde dont le diamètre est compris entre le grand et le petit côté de la surface (4).

4. Lentille de champ (8) destinée à être utilisée avec un moyen d'éclairage et à focaliser les rayons provenant de ce moyen d'éclairage au centre Po d'une pupille à éclairer, la forme de la lentille de champ étant décrite par un ensemble de courbes élémentaires, chaque courbe élémentaire étant située sur une courbe enveloppe correspondant à l'intersection de la surface de la lentille de champ avec un plan médian (Po, β) passant à travers un point Po de l'axe optique (oz) à éclairer et faisant un angle β avec le plan horizontal, la courbe enveloppe correspondant à un plan médian spécifique (Po, β) étant décrite par une fonction $Z_{Po\beta}$($\rho$) étant telle, du fait de l'inclinaison de chaque courbe élémentaire, que les rayons extrêmes provenant du moyen d'éclairage (3) au travers de ladite lentille passent par Po, la forme de la lentille de champ étant obtenue en interpolant avec une fonction Z(x,y) un nombre donné de courbes décrivant une fonction $Z_{Po\beta}$($\rho$), chacune correspondant à un plan médian différent.

5. Lentille de correction d'angle (11) destinée à être utilisée avec un moyen d'éclairage et à focaliser les rayons provenant de ce moyen d'éclairage en un point P à éclairer, la forme de la lentille de correction étant décrite par un ensemble de courbes élémentaires, chaque courbe élémentaire étant située sur une courbe enveloppe correspondant à l'intersection de la surface de la lentille de correction d'angle avec un plan médian (P, β) passant à travers le point P à éclairer et faisant un angle β avec le plan horizontal, décrivant la surface de la lentille à une distance d de la lentille, la courbe enveloppe correspondant à un plan médian spécifique (P, β) étant décrite par une fonction $Z_{P\beta}$($\rho$) étant telle, du fait de l'inclinaison de chaque courbe élémentaire, que les rayons extrêmes provenant du moyen d'éclairage (3) à travers ladite lentille passent par P, la forme de la lentille étant obtenue en interpolant avec une fonction Z(x,y) un nombre donné de courbes décrivant une fonction $Z_{P\beta}$($\rho$), chacune correspondant à un plan médian différent.

6. Lentille de correction d'angle (17) destinée à être éclairée par tout type de réflecteur (1) et à éclairer un écran (10), la forme de la lentille de correction d'angle étant décrite par un ensemble de courbes élémentaires, chaque courbe élémentaire étant située sur une courbe enveloppe correspondant à l'intersection de la surface de la lentille de correction d'angle avec un plan médian (r, β) défini par l'angle β que fait ce plan avec le plan horizontal, r étant défini dans ce plan médian par la distance entre le centre de la pupille et le bord de l'écran, la courbe enveloppe correspondant à un plan médian spécifique (r, β) étant décrite par une fonction $Z_{r\beta}(\rho)$ étant telle, du fait de l'inclinaison de chaque courbe élémentaire, que les rayons issus du réflecteur entrent dans l'écran (10), la forme de la lentille de correction d'angle étant obtenue en interpolant avec une fonction z(x,y) un nombre donné de courbes décrivant des fonctions $Z_{r\beta}(\rho)$, chacune correspondant à différents plans médians.

**7.** Objet selon l'une quelqonque des revendications 1 à 6, chaque fonction Z(ρ) étant une équation de cônique additionnée à celle d'un polynôme, ou un polynôme pur.

**8.** Objet selon l'une quelconque des revendications 1 à 7, la fonction d'interpolation Z(x,y) étant un polynôme.

**9.** Système de projection à travers un afficheur à cristaux liquides, incorporant un réflecteur, une lentille de champ et une lentille de correction d'angle selon les revendications précédentes.

**Patentansprüche**

**1.** Reflektor (1, 5), der dazu verwendet wird, eine Fläche zu beleuchten, **dadurch gekennzeichnet, daß** die Form des Reflektors (5) durch eine Gesamtheit von Elementarkurven beschrieben wird, wobei jede Elementarkurve auf einer Kurveneinhüllenden liegt, die der Schnittlinie der Reflektorfläche mit einer Medianebene (r, β) entspricht, die durch den Winkel β definiert wird, den diese Ebene mit der Horizontalebene bildet, wobei r in dieser Medianebene durch den Abstand zwischen der Mitte und dem Rand der zu beleuchtenden Fläche (4) definiert ist, wobei die Kurveneinhüllende einer speziellen Medianebene (r, β) entspricht, die durch eine solche Funktion $Z_{r\beta}(\rho)$ beschrieben wird, daß wegen der Neigung jeder Elementarkurve die Extremalstrahlen, die von einem Beleuchtungsmittel (3) kommen und durch den Reflektor reflektiert werden, in eine Blende vom Radius r eintreten, wobei r von der speziellen Medianebene abhängt, wobei die Form des Reflektors erhalten wird, indem mit einer Funktion Z(x, y) eine gegebene Zahl von Kurven interpoliert werden, die die Funktion $Z_{r\beta}(\rho)$ beschreiben, wobei jede einer unterschiedlichen Medianebene entspricht.

**2.** Reflektor nach Anspruch 1, wobei der Parameter r und der Winkel β eine rechtwinklige Fläche (4) definieren.

**3.** Reflektor nach einem der Ansprüche 1 und 2, **dadurch gekennzeichnet, daß** der Parameter r und der Winkel β eine annähernd runde Fläche definieren, deren Durchmesser zwischen der großen und der kleinen Seite der Fläche (4) liegen.

**4.** Feldlinse (8), die dazu bestimmt ist, mit einem Beleuchtungsmittel verwendet zu werden und die von diesem Beleuchtungsmittel kommenden Strahlen auf die Mitte Po einer zu beleuchtenden Pupille zu fokussieren, wobei die Form der Feldlinse durch eine Gesamtheit von Elementarkurven beschrieben wird, wobei jede Elementarkurve auf einer Kurveneinhüllenden liegt, die der Schnittlinie der Oberfläche der Feldlinse mit einer Medianebene (Po, β) entspricht, die durch einen Punkt Po der zu beleuchtenden optischen Achse (oz) läuft und mit der Horizontalebene einen Winkel β bildet, wobei die Kurveneinhüllende einer speziellen Medianebene (Po,β) entspricht, die durch eine solche Funktion $Z_{Po\beta}(\rho)$ beschrieben wird, daß wegen der Neigung jeder Elementarkurve, die Extremalstrahlen, die von einem Beleuchtungsmittel (3) durch die Linse kommen, durch Po laufen, wobei die Form der Feldlinse erhalten wird, indem mit einer Funktion Z(x, y) eine gegebene Zahl von Kurven interpoliert werden, die eine Funktion $Z_{Po\beta}(\rho)$ beschreiben, wobei jede einer unterschiedlichen Medianebene entspricht.

**5.** Winkelkorrekturlinse (11), die dazu bestimmt ist, mit einem Beleuchtungsmittel verwendet zu werden und die von diesem Beleuchtungsmittel kommenden Strahlen auf einen zu beleuchtenden Punkt P zu fokussieren, wobei die Form der Korrekturlinse durch eine Gesamtheit von Elementarkurven beschrieben wird, wobei jede Elementarkurve auf einer Kurveneinhüllenden liegt, die der Schnittlinie der Oberfläche der Winkelkorrekturlinse mit einer Medianebene (P, β) entspricht, die durch den zu beleuchtenden Punkt P läuft und mit der Horizontalebene einen Winkel β bildet, und die Oberfläche der Linse in einem Abstand d von der Linse beschreibt, wobei die Kurveneinhüllende einer speziellen Medianebene (P, β) entspricht, die durch eine solche Funktion $Z_{P\beta}(\rho)$ beschrieben wird, daß wegen der Neigung jeder Elementarkurve die Extremalstrahlen, die von einem Beleuchtungsmittel (3) durch die Linse kommen, durch P laufen, wobei die Form der Linse erhalten wird, indem mit einer Funktion Z(x, y) eine gegebene Zahl von Kurven interpoliert werden, die eine Funktion $Z_{P\beta}(\rho)$ beschreiben, wobei jede einer unterschiedlichen Medianebene entspricht.

**6.** Winkelkorrekturlinse (17), die dazu bestimmt ist, durch eine beliebige Art von Reflektor (1) beleuchtet zu werden und einen Bildschirm (10) zu beleuchten, wobei die Form der Winkelkorrekturlinse durch eine Gesamtheit von Elementarkurven beschrieben wird, wobei jede Elementarkurve auf einer Kurveneinhüllenden liegt, die der Schnittlinie der Oberfläche der Winkelkorrekturlinse mit einer Medianebene (r, β) entspricht, die durch den Winkel β definiert wird, den diese Ebene mit der Horizontalebene bildet, wobei r in dieser Medianebene durch den Abstand zwischen der Mitte der Pupille und dem Rand des Bildschirms definiert ist, wobei die Kurveneinhüllende einer speziellen Medianebene (r, β) entspricht, die durch eine solche Funktion $Z_{r\beta}(\rho)$ beschrieben wird, daß wegen der Neigung jeder Elementarkurve die Extremalstrahlen, die von dem Reflektor stammen, in den Bildschirm (10) eintreten, wobei die Form der Winkelkorrekturlinse erhalten wird, indem mit einer Funktion z(x, y) eine gegebene Zahl von Kurven interpoliert werden, die die Funktion $Z_{r\beta}(\rho)$ beschreiben, wobei jede unterschiedlichen Medianebenen entspricht.

**7.** Gegenstand nach einem der Ansprüche 1 bis 6, wobei jede Funktion Z(ρ) eine Kegelschnittgleichung, die zu derjenigen eines Polynoms hinzuaddiert wird, oder ein reines Polynom ist.

**8.** Gegenstand nach einem der Ansprüche 1 bis 7, wobei die Interpolationsfunktion Z(x, y) ein Polynom ist.

**9.** System zur Projektion durch eine Flüssigkristallanzeige mit einem Reflektor, einer Feldlinse und einer Winkelkorrekturlinse gemäß den vorhergehenden Ansprüchen.

**Claims**

**1.** Reflector (1,5) used for illuminating a surface, **characterized in that** the shape of the reflector (5) being described by a combination of elementary curves, each elementary curve being located on an envelope curve corresponding to the intersection of the surface of the reflector with a mid-plane (r,β) defined by the angle β that this plane makes with the horizontal plane, r being defined in this mid-plane by the distance between the centre and the edge of the surface (4) to be illuminated, the envelope curve corresponding to a specific mid-plane (r,β) being described by a function $Z_{r\beta}(\rho)$ being such that, because of the inclination of each elementary curve, the extreme rays coming from an illumination means (3) and reflected by the said reflector enter a diaphragm of radius r, r depending on the said specific mid-plane, the shape of the reflector being obtained by interpolating, with a function Z(x,y), a given number of curves describing the function $Z_{r\beta}(\rho)$, each one corresponding to a different mid-plane.

**2.** Reflector according to Claim 1, the parameter r and the angle β defining a rectangular surface (4).

**3.** Reflector according to either of Claims 1 and 2, **characterized by** the parameter r and the angle β defining an approximately round surface, the diameter of which lies between the large side and the small side of the surface (4).

**4.** Field lens (8) intended to be used with an illumination means and to focus the rays coming from this illumination means at the centre Po of a pupil to be illuminated, the shape of the field lens being described by a combination of elementary curves, each elementary curve being located on an envelope curve corresponding to the intersection of the surface of the field lens with a mid-plane (Po,β) passing through a point Po on the optical axis (Oz) to be illuminated and making an angle β with the horizontal plane, the envelope curve corresponding to a specific mid-plane (Po,β) being described by a function $Z_{Po\beta}(\rho)$ being such that, because of the inclination of each elementary curve, the extreme rays coming from the illumination means (3) through the said lens pass via Po, the shape of the field lens being obtained by interpolating, with a function Z(x,y), a given number of curves describing a function $Z_{Po\beta}(\rho)$, each one corresponding to a different mid-plane.

**5.** Angle-correcting lens (11) intended to be used with an illumination means and to focus the rays coming from this illumination means at a point P to be illuminated, the shape of the correcting lens being described by a combination of elementary curves, each elementary curve being located on an envelope curve corresponding to the intersection of the surface of the angle-correcting lens with a mid-plane (P,β) passing through the point P to be illuminated and making an angle β with the horizontal plane, describing the surface of the lens at a distance d from the lens, the envelope curve corresponding to a specific mid-plane (P,β) being described by a function $Z_{P\beta}(\rho)$ being such that, because of the inclination of each elementary curve, the extreme rays coming from the illumination means (3) through the said lens pass via P, the shape of the lens being obtained by interpolating, with a function Z(x,y), a given number of curves describing a function $Z_{P\beta}(\rho)$, each one corresponding to a different mid-plane.

6.  Angle-correcting lens (17) intended to be illuminated by any type of reflector (1) and to illuminate a screen (10), the shape of the angle-correcting lens being described by a combination of elementary curves, each elementary curve being located on an envelope curve corresponding to the intersection of the surface of the angle-correcting lens with a mid-plane (r,β) defined by the angle β that this plane makes with the horizontal plane, r being defined in this mid-plane by the distance between the centre of the pupil and the edge of the screen, the envelope curve corresponding to a specific mid-plane (r, β) being described by a function $Z_{r\beta}(\rho)$ being such that, because of the inclination of each elementary curve, the rays coming from the reflector enter the screen (10), the shape of the angle-correcting lens being obtained by interpolating, with a function Z(x,y), a given number of curves describing functions $Z_{r\beta}(\rho)$, each one corresponding to various mid-planes.

7.  Object according to any one of Claims 1 to 6, each function Z(ρ) being an equation of a conic added to that of a polynomial, or a pure polynomial.

8.  Object according to any one of Claims 1 to 7, the interpolation function Z(x,y) being a polynomial.

9.  System for projection through a liquid-crystal display, incorporating a reflector, a field lens and an angle-correcting lens according to the preceding claims.

FIG.1

FIG.2a

FIG.2b

FIG.2c

FIG.3

# FIG.4

FIG.5